# EUROPEAN PATENT APPLICATION

(11) **EP 3 107 065 A1**
(43) Date of publication of application: **21.12.2016**
(21) Application number: 16174323.2
(22) Date of filing: 14.06.2016
(51) Int. Cl.: G06T 5/50, G06T 15/50, G06T 7/00

(54) **METHODS AND SYSTEMS FOR PROVIDING VIRTUAL LIGHTING**

(30) Priority: 15.06.2015 US 201562175577 P; 31.03.2016 US 201615088070
(71) Applicant: MediaTek Inc., Hsin-Chu 300 (TW)
(72) Inventor: CHAN, Cheng-Che, 302 Hsinchu County (TW); CHENG, Cheng-Che, New Taipei City 220 (TW); HUANG, Po-hua, 300 Hsinchu City (TW)
(74) Representative: Goddar, Heinz J.

(57) **Abstract**

Methods and systems for improving images and video captured by a device is provided. The methods and systems may involve a virtual 3D model for a scene that is in view of a device's sensors. The virtual 3D model may be generated using the sensor information and be used to produce a 2D lighting image. The lighting image may be applied to a captured image of the scene to improve lighting of the captured image or video. A virtual light source may be implemented as part of the process, which if desired, can be moved, adjusted, or modified in the virtual 3D model to adjust the lighting image and consequently adjust a lighted image or a final image.

## Description

### FIELD OF THE INVENTION

The present invention relates to methods and systems for providing virtual light to an image, more particularly to such methods and systems that involve providing virtual light to an image through one or more virtual lighting sources in a virtual three-dimensional space.

### BACKGROUND OF THE INVENTION

Electronic devices such as cameras or other image capture instrument may capture photos based on the light that illuminates a scene. In low-light conditions, ambient light alone may not be adequate to illuminate a scene and images captured from the scene may be dark or underexposed.

To improve illumination in low-light conditions, many image capture instruments or devices may include a strobe light that produces a flash of light to supplement the ambient light illuminating the scene. While camera flashes can provide a high intensity light to further illuminate a scene, they cannot be easily controlled to produce a consistent amount of light. As such, the obtained image may not be properly exposed and may have some areas of the scene to be brighter than other areas of the scene. Moreover, the strong intensity of light may produce red eyes and the bulk and weight of camera flashes may make them inconvenient to carry.

Illumination in low-light conditions may also be improved by utilizing the automatic exposure feature of the image capture instrument. This feature involves opening the lens aperture for a period of time and controlling the shutter speed in order to obtain the correct exposure. While leaving the lens aperture open for a longer period of time would allow the image capture instrument to receive more light and thus illuminate the picture better, the image capture instrument also becomes more sensitive to the camera shaking or subject motion, which, when it occurs, may blur and ruin the picture.

While there are methods and systems that have tried to resolve the problems associated with strobe light and the automatic exposure feature, none of them are effective. Accordingly, there is a need for improved methods and systems that can illuminate and capture a picture or image without the above problems.

### SUMMARY OF THE INVENTION

In some embodiments of the invention a computer-implemented method includes implementing, on a mobile device, a virtual light source that is adjustable in a virtual three-dimensional (3D) space. The method also includes receiving a user input instructing the mobile device to capture in real time a two-dimensional (2D) output image of a current view of a plurality of device sensors. The method further includes receiving a plurality of sensor outputs produced from sensing information in the current view by the plurality of device sensors comprising sensing, by one or more of the plurality of device sensors, a preliminary 2D frame. The method also includes that in response to receiving the sensor outputs and the user input, producing on the mobile device, in real time in relation to receiving the sensor outputs, the 2D output image in accordance with an adjustment to the virtual light source and the preliminary 2D frame.

In certain embodiments of the invention a processing system for providing a mobile camera application for use with a plurality of device sensors of a mobile device includes a processor and related circuitry that are configured to receive a user input instructing the mobile device to capture in real time a two-dimensional (2D) output image of a current view of the plurality of device sensors. The processor and related circuitry may also be configured to receive a plurality of sensor outputs produced from sensing information in the current view by the plurality of device sensors comprising sensing, by one or more of the plurality of device sensors, a preliminary 2D frame. The processor and related circuitry may further be configured to create a virtual three-dimensional (3D) space from at least some of the plurality of sensor outputs. The processor and related circuitry may also be configured to provide lighting effect to the virtual 3D space according to an adjustment to a virtual light source in the virtual 3D space upon receiving a signal generated from such an adjustment. The processor and related circuitry may further be configured to, in response to receiving the sensor outputs and the user input, produce, in real time in relation to receiving the sensor outputs, the 2D output image in accordance with the adjustment to the virtual light source and the preliminary 2D frame.

### BRIEF DESCRIPTION OF THE DRAWINGS

The nature and various advantages of the present invention will become more apparent upon consideration of the following detailed description, taken in conjunction with the accompanying drawings, in which like reference characters refer to like parts throughout, and in which:
Fig. 1 depicts an illustrative method for providing virtual light to an image in accordance with some embodiments of the present invention;
Fig. 2 depicts an illustrative system for performing the method depicted in Fig. 1 in accordance with some embodiments of the present invention;
Fig. 3 depicts an illustrative user interface for adjusting one or more virtual lighting sources in accordance with some embodiments of the present invention;
Fig. 4 depicts an illustrative scene tree and a renderer for generating a lighting image in accordance with some embodiments of the present invention;
Fig. 5 depicts an illustrative flow chart for the method of creating a lighting image in accordance with some embodiments of the present invention;
Fig. 6 depicts an illustrative flow chart for the method of creating a lighting image based on user-adjusted lighting parameters in accordance with some embodiments of the present invention;
Fig. 7 depicts an illustrative flow chart for the method of producing a lighted image according user-adjusted lighting parameters in accordance with some embodiments of the present invention;
Fig. 8 depicts an illustrative flow chart for the method of producing a lighted image according to automatically adjusted lighting parameters in accordance with some embodiments of the present invention; and
Fig. 9 depicts an illustrative system architecture for capturing video with virtual lighting in accordance with some embodiments of the present invention.

### DETAILED DESCRIPTION OF THE INVENTION

In accordance with principles of the present invention, an advantageous system is provided that is particularly useful for a smartphone or tablet but would be recognized to have other applications. In general, to improve captured images or video, a feature is provided in which a virtual 3D model for a scene that is in view of a smartphone's sensors is generated using the sensor information. The virtual 3D model is then used to produce a 2D lighting image. The lighting image is applied to a captured image of the scene to improve the lighting of the captured image or video. If desired, a virtual light source can be implemented as part of the process which, if desired, can be moved, adjusted, or modified in the virtual 3D space to adjust the lighting image and consequently adjust a lighted image.

Embodiments of the present invention are applicable images, videos, or other view capturing applications. In some embodiments, a "live" feature is provided in that the device that implements the feature provides this feature to the user while the user is using their camera on their device. The feature can be implemented as a selectable option that the user activates through or in conjunction with the camera application to select the use of the feature on a current image or view, or on an image or view that had been recorded on the device (e.g., an interactive option displayed that allows the user to apply this feature). The feature can also be implemented to be available and operating in preview mode before the user selects (triggers the camera) to capture image or video, while the user is viewing a particular scene through a screen of a device that displays a viewscope of the camera. Automated activation of the camera is also contemplated as opposed to only the using the feature when a user selects to record an image or video. The technique can have significant advantage over the use of actual flashlight or strobe when taking a picture. The timing, amplification, and power usage of an actual flash can create complexities and disadvantages.

It would be understood that the present discussion is applicable to implementations as a system, method, computer readable medium, device, or other arrangements.

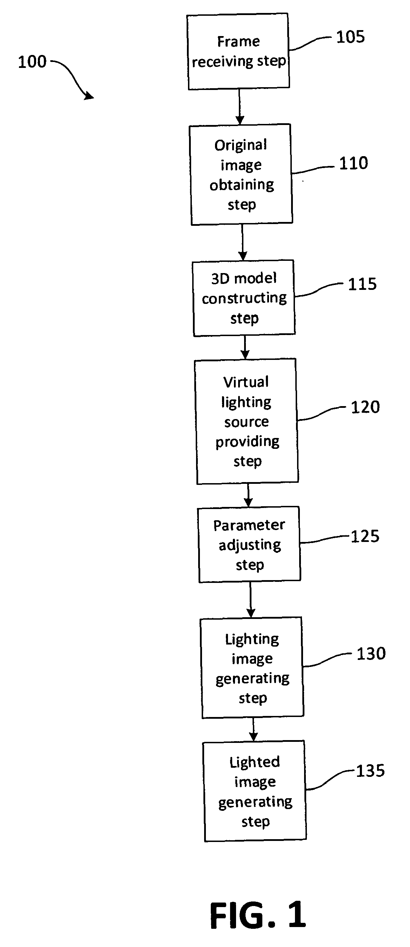

Referring to Fig. 1, one embodiment of the method 100 for providing virtual light to an image is illustrated. The method 100 may comprise receiving a plurality of frames captured by a plurality of sensors (frame receiving step 105), obtaining an original image based on a frame of the received plurality of frames (original image obtaining step 110), constructing a three-dimensional (3D) model based on a set of frames of the received plurality of frames (3D model constructing step 115), providing one or more virtual lighting sources (virtual lighting source providing step 120), adjusting one or more lighting parameters of the one or more virtual lighting sources (parameter adjusting step 125), generating a lighting image based on the three-dimensional model and the one or more virtual lighting sources with adjusted parameters (lighting image generating step 130), and generating a lighted image based on the original image and the lighting image (lighted image generating step 135).

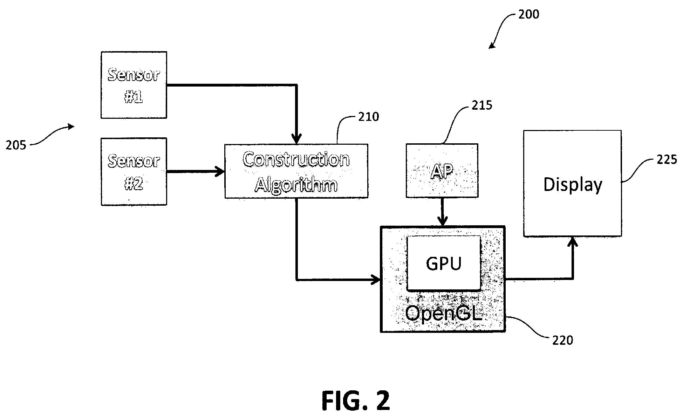

Fig. 2 illustrates one embodiment of the system 200 for performing the method 100. The system 200 may comprise a plurality of sensors 205 configured to capture a plurality of frames including a frame from which an original image is obtained, a construction module 210 configured to create a three-dimensional (3D) model from two or more frames of the plurality of frames, an application processor (AP) 215 configured to create a 3D scene tree having lighting nodes, and a graphics processor 220 configured to render a lighting image based on the 3D model and the 3D scene tree with adjusted lighting nodes and to render a lighted image based on the original image and the lighting image. The system 200 may further comprise a display 225 configured to display the lighted image. All the methods, systems, and embodiments described in this invention may be implemented on a mobile device such as a cellular phone, a tablet, a personal data assistant (PDA), a camera, or other handheld device. It is noted that in Fig. 2, OpenGL (or other programming interface) is illustrated to be partially implemented by hardware GPU. However, in other embodiment, OpenGL (or other programming interface) can be wholly implemented by hardware or software. Fig. 2 provides an illustrative embodiment of a system that implements or includes embodiments of the present invention. Other configurations are also contemplated such as ones involving fewer hardware elements or integrated circuits or ones that are primarily made of hardware devices such as one or more ASICs. Fig. 2 is also illustrative of a processing system in that one or more processors (an integrated semiconductor chip that implements a processor) are understood from the figure as implicitly or explicitly provided therein (such as the GPU and/or a main processor of a smartphone, tablet, or other image capture device). A processor may have related circuitry such as RAM, ROM, application specific circuits, communications circuitry, or other device components that are used to carry out the desired functionality, which would be understood by those of ordinary skill in the art. Display 225 or sensors 205 are not necessarily considered to be part of the processing system but can be if desired.

In the frame receiving step 105, the plurality of frames are preferably received directly from the plurality of sensors without retrieving from a non-volatile storage device. The non-volatile storage device may be any kind of known computer storage device that can retain information stored thereon when not powered. Examples of non-volatile storage devices include read-only-memory (ROM), flash memory, hard drives, and memory cards, such as an SD card. In some embodiments, the plurality of sensors 205 may comprise only image sensors, only depth sensors, or a combination of image sensors and depth sensors (e.g., one or more image sensors and one or more depth sensors or sensors that can perform the functions of both types of sensors). The use of other types of sensors is also contemplated. The plurality of sensors 205 may be configured to be synchronized to capture frames simultaneously. Each of the plurality of sensors 205 may be configured to capture a frame at a different angle. Image sensors may be charge-coupled devices (CCDs), active pixel sensors, complementary metal oxide semiconductor (CMOS) sensors, solid-state images sensors, or any other similar image sensors. Depth sensors may be infrared (IR) sensors, laser scanners, sonic sensors, or any other similar depth sensors. As such, each of the received plurality of frames may be an image or a frame containing depth-related information depending on which sensor captured the frame. An image may refer to a frame captured by an image sensor. A frame containing depth-related information may refer to a frame captured by a depth sensor.

In the original image obtaining step 110, the frame on which the original image is based is a frame captured by an image sensor and is one of the received plurality of frames. The frame is captured according to the light illuminating a scene. The light illuminating the scene may be only ambient light or a combination of ambient light and strobe/flash light. Thus, the frame may be captured with or without a camera flash. The frame may also be captured with the automatic exposure feature turned on or off or with any other feature a mobile device may have turned on or off. The obtained original image may be the frame itself without processing the frame (an actual or raw frame of the received plurality of frames) or an image obtained by processing the frame without providing the frame a lighting image or without supplementing the frame with the light of a lighting image (lighting image and the light of a lighting image are described below). Processing may refer to one or more additional processes that a mobile device may need to perform in order to produce the original image. The original image, with or without processing, is a two-dimensional (2D) image.

In the 3D model constructing step 115, the set of frames may comprise only frames captured by image sensors, only frames captured by depth sensors or frames captured by image sensors and frames captured by depth sensors. The set of frames may comprise at least two frames captured at two different angles. The at least two frames may also be captured simultaneously. The 3D model may be constructed by a construction module comprising tracking 2D features of objects in the set of frames and estimating 3D points and camera poses or angles. The 2D features may be edges, points, lines, textures, features with strong intensity contrast, or other similar features. The 3D points are points estimated based on the tracked features in a 3D domain. The 3D model is constructed from the estimated 3D points and the estimated camera poses. Module refers to software module that is executed by the illustrative system of FIG. 2 or more generally by a processor and the processor's related circuit for carrying its functionality.

In the virtual lighting source providing step 120, the one or more virtual lighting sources are provided via application processor (AP) 215. Each of the one or more virtual lighting sources may function like a camera flash. They may be employed to replace a camera flash or to enhance or compensate the flash light of a camera flash if one is utilized. Each of the one or more virtual lighting sources may have one or more lighting parameters. The one or more lighting parameters may comprise position of the one or more virtual lighting sources, radiation or illumination orientation of the one or more virtual lighting sources, radiation area of the one or more virtual lighting sources, radiation strength of the one or more virtual lighting sources, radiation type of the one or more virtual lighting sources, radiation color of the one or more virtual lighting sources, and other operating modes of a camera flash. Each parameter is adjustable. Each parameter may be adjusted by a user of the mobile device (manually adjusted) or be automatically adjusted by the mobile device (automatically adjusted).

In the parameter adjusting step 125, each parameter may be adjusted by the user by receiving input from the user prior to receiving the plurality of frames. Input may be received through a user interface displayed on a screen of the mobile device. The application processor may be programmed, such as with a user experience (UX) application, to provide and display the user interface.

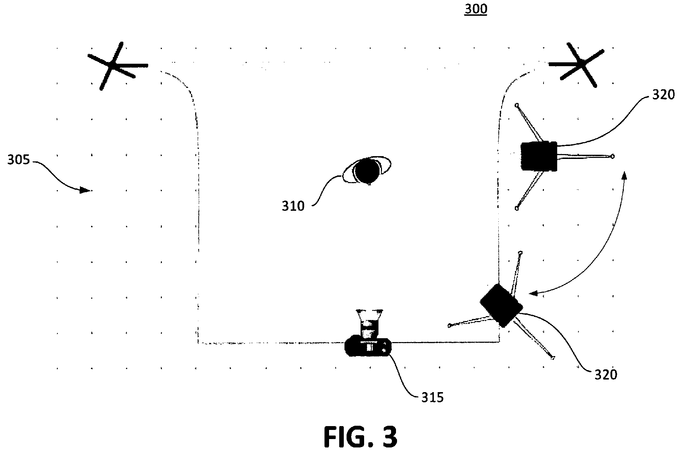

In some embodiments, as shown in Fig. 3, the user interface 300 may be configured to comprise a 3D environment 305, one or more virtual objects 310 disposed in the 3D environment, a virtual mobile device 315 disposed in the 3D environment, and one or more virtual lighting sources 320 disposed in the 3D environment (collectively referred to as "virtual elements" 305 to 320). The location of the virtual mobile device 315 and the direction of the virtual mobile device's lens indicate the direction in which a frame is captured. The user interface 300 may be displayed to the user in a manner such that all the virtual elements 305 to 320 are presented to the user in a top view. In the top view, the user may see the physical distance between the virtual mobile device 315 and the one or more virtual objects 310, the physical distance between the one or more objects 310 and the one or more virtual lighting sources 320, and the physical distance between the virtual mobile device 315 and the one or more virtual lighting sources 320. Also in the top view, the one or more virtual lighting sources 320 may be moved by user input to any location in the 3D environment 305. User input may be physical contacts from a touch screen if a touch screen is employed and the user interface 300 is implemented on the touch screen or be physical actions from input mechanisms such as button and mouse. For example, the one or more virtual lighting sources 320 may be moved to a location behind the one or more objects 310 such that the one or more objects 310 are between the virtual mobile device 315 and the one or more virtual lighting sources 320.

The one or more virtual lighting sources 320 may also be moved to a location where the direction in which the virtual mobile device 315 faces the one or more objects 310 and the direction in which the one or more virtual lighting sources illuminating light are perpendicular to each other (a perpendicular location). A perpendicular location may refer to a location to the left or right relative to the one or more virtual objects 310 in the top view. A perpendicular location may also refer to a location above (e.g., a location out of the page/screen) or below (e.g., a location into the page/screen) relative to the one or more virtual objects 310 in the top view if the user interface 300 is configured to allow such movements. Although Fig. 3 illustrates only top view and certain locations of the one or more virtual lighting sources 320, other views and locations are also contemplated. The one or more virtual lighting sources may also be moved to a location closer to or farther from the one or more virtual objects 310.

Each parameter may also be automatically adjusted by the mobile device (or the application processor of the mobile device) according to environment light. Environment light may be detected by the plurality of sensors or different sensors (e.g., light sensors) before or while frames are being captured. Environment light may or may not include strobe light depending on if a strobe light is utilized. Each parameter may be automatically adjusted by the mobile device without displaying the user interface or receiving input from the user. For instance, based on the detected environment light in the scene, the mobile device may determine the number of virtual lighting sources should be employed, the location of each virtual lighting source, the angle of each virtual lighting source, the illuminating strength of each virtual lighting source, and so forth. Each parameter may also be automatically adjusted by the mobile device according to the content in the set of frames or in the 3D model such as number of objects, object shapes, object locations, distance between objects, and so forth. Each parameter may also be automatically adjusted by the mobile device according to both environment light and the content. The parameters may also be adjusted by both the user and the mobile device. For example, some of the parameters may be adjusted by the user through the user interface prior to receiving the plurality of frames and the remaining parameters (or some of the remaining parameters) may be adjusted by the mobile device after receiving the plurality of frames or after constructing a 3D environment. The remaining parameters may be adjusted by the image captured instrument according to the parameters adjusted by the user. Other adjustment orders by the mobile device are also contemplated.

In the lighting image generating step 130, the lighting image is generated based on the 3D model and the lighting parameters. In particular, the step 130 may comprise creating a 3D scene tree comprising one or more lightings nodes, one or more 3D model nodes, and one or more camera nodes, adjusting the lighting nodes according to the adjusted one or more parameters, and rendering the lighting image based on the 3D scene tree with adjusted lighting nodes. The 3D scene tree is created from the constructed 3D model received from the construction module and the adjusted lighting parameters received from the application processor. The 3D scene tree may be created through a method that is known to one with ordinary skill in the art. Each of the one or more lighting nodes may correspond to a virtual lighting source and the parameters of the virtual lighting source, and may be adjusted according to the adjustments made to the parameters of the corresponding virtual lighting source. The one or more 3D model nodes and the one or more camera nodes contain information obtained from the constructed 3D model. Examples of the one or more 3D model nodes may include each node corresponding to a bundle of data for rendering aspects of the 3D model at a particular resolution and a set of camera parameters including a point of view for rendering the 3D model. Examples of the one or more camera nodes are frame capturing direction and camera location. Each of the above nodes may contain its corresponding information in a matrix form and they together provide the necessary information to render a lighting image.

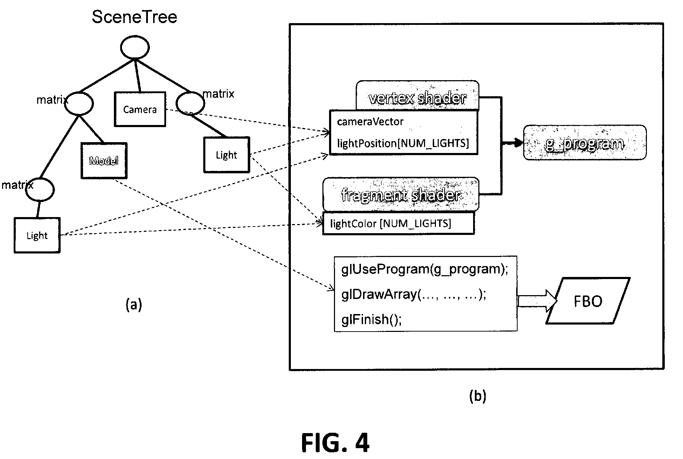

Fig. 4(a) is an example of the 3D scene tree. A graphics processor (e.g., 220, Fig. 2) supporting OpenGL^{®} or a similar programming interface may be configured to render the lighting image based on the 3D scene tree (or comprise a renderer for drawing a lighting image as shown in Fig. 4(b)). Specifically, in FIG. 4(a), there are different nodes respectively represented by corresponding matrixes. The matrixes may define position dependency between different objects which may include, for example, light(s) (e.g., candle fire or light reflected from a wall), a camera, and a model (e.g., a candle). The position dependency may include displacement, rotation, and/or zooming. In other words, the nodes or matrixes can represent the position dependencies between the light, the camera and the model. When parameters of a virtual lighting source are adjusted, values of the corresponding matrixes can also be varied. Accordingly, the 3D scene tree can be adjusted to represent the adjusted virtual lighting source. In FIG. 4(b), the 3D scene tree is translated or represented in the language of OpenGL^{®}. However, it is noted any other interface may be implemented if required. The lighting image is a 2D image containing only light. In other words, the graphics processor or renderer produces a 2D image containing only light from 3D information or a 3D environment. The amount of light may vary across the lighting image and the amount of variation may depend on the adjusted parameters. It is possible for the 2D image to contain other types of data or information. The primary objective is for the file to contain at least the lighting image (the light that is described herein for generating a lighting image and consequently a lighted image).

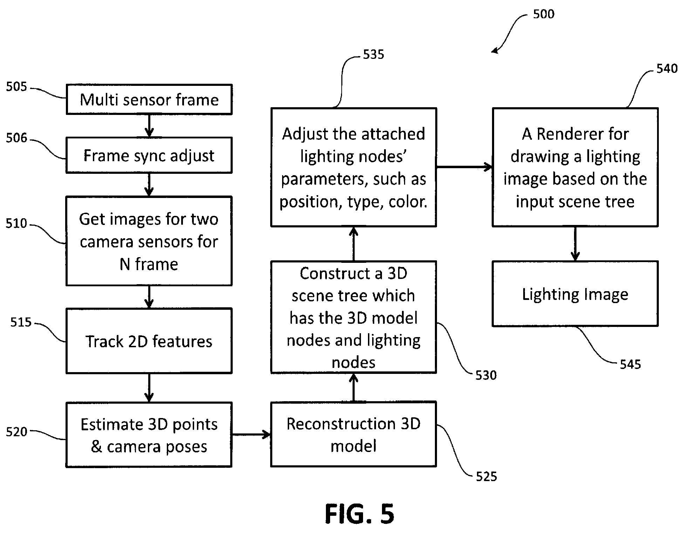

Fig. 5 depicts a flow chart for the method 500 of creating a lighting image. Many aspects of the method 500 may have already been discussed above and the flow chart is merely provided to facilitate understanding of embodiments of the present invention in another illustration. The flow chart may also be another embodiment of the method 100. The method 500 may comprise receiving multi-sensor frame 505 (or a plurality of frames captured by a plurality of sensors), synchronizing a plurality of sensors 506 (steps 505 and 506 are generally implemented as one step but are displayed for convenience as two steps), obtaining a set of frames from the multi-sensor frame 510, estimating 3D points and camera poses 520, constructing a 3D model 525, constructing a 3D scene tree 530 having one or more lighting nodes with each having one or more lighting parameters, one or more 3D model nodes, and one or more camera nodes, adjusting the one or more lighting parameters 535, and rendering a lighting image based on the 3D scene tree 540 with adjusted lighting parameters. Step 505 may be performed by the plurality of sensors. Method 500 can be implemented using the illustrative system of Fig. 2 or more generally using a processor and related circuitry.

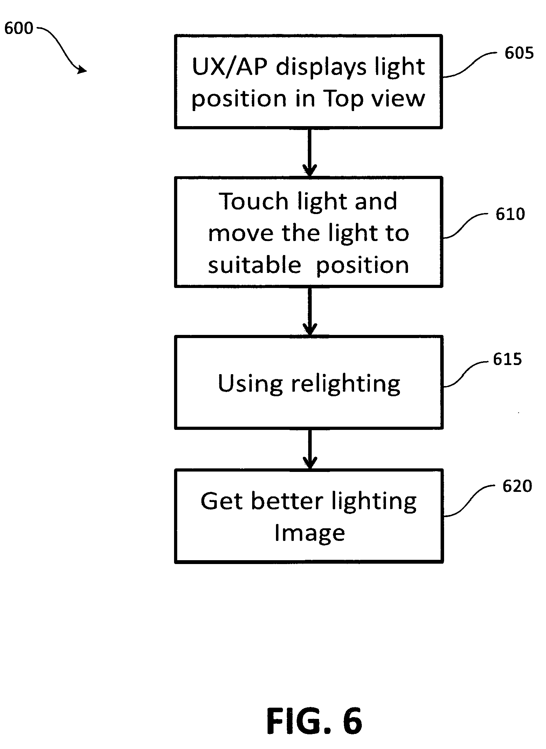

Fig. 6 depicts a flow chart for the method 600 of creating a lighting image based on user-adjusted lighting parameters. Many aspects of the method 600 may have already been discussed above and the flow chart is merely provided to facilitate understanding of embodiments of the present invention in another illustration. The flow chart may also be another embodiment of the method. The method 600 may comprise displaying one or more virtual lighting sources in a top view 605, in a user interface (UX), moving the one or more virtual lighting sources to suitable positions 610, applying relighting 615 (examples discussed herein), and produce a better lighting image 620. Manually moving the one or more virtual lighting sources to suitable positions may be one of the adjustable lighting parameters discussed above and manual adjustments may also be made to other lighting parameters. The method may be performed by the illustrative system of Fig. 2 or more generally by a processor and related circuitry. It should also be understood that other system arrangements are also contemplated such as those generally known to those of ordinary skill in the art in the field of smartphones or tablets.

Referring back to In the lighted image generating step 135 in Fig. 1, the lighted image is generated based on the original image and the lighted image. The lighted image may be generated by combining the original image and the lighting image. The generated lighted image is a 2D image. If desired, the same graphics processor for rendering the lighting image may be configured to render the lighted image.

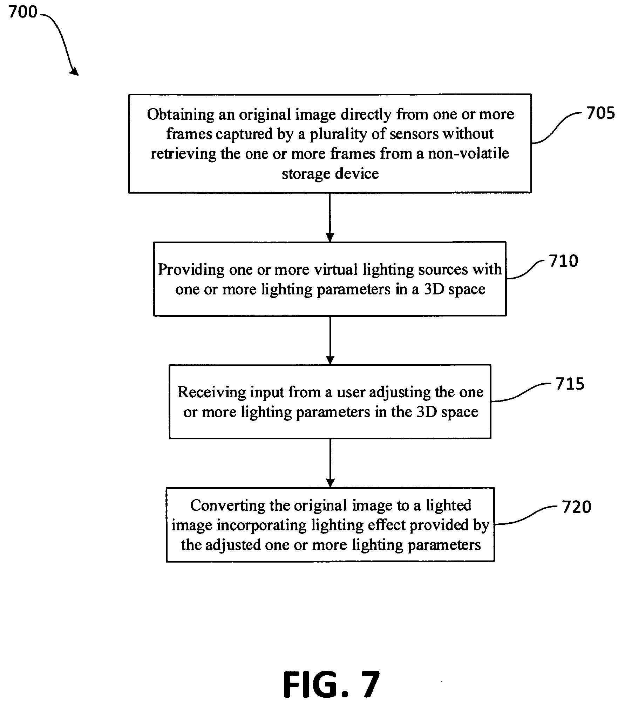

Referring to Fig. 7, another embodiment of the method 700 for providing virtual light to an image is illustrated. This embodiment is directed to producing a lighted image according to user-adjusted lighting parameters. In Fig. 7, the method 700 may comprise at 705, obtaining an original image directly from one or more frames captured by a plurality of sensors without retrieving the one or more frames from a non-volatile storage device. Method 700 may include at 710, providing one or more virtual lighting sources with one or more lighting parameters in a 3D space. Method 700 may also include at 715, receiving input from a user adjusting the one or more lighting parameters in the 3D space. Method 700 may further include at 720, converting the original image to a lighted image incorporating lighting effect provided by the adjusted one or more lighting parameters. This can for example provide a new feature on smartphones by providing for a virtual lighting feature that can be applied when a user uses a smartphone to capture a new image.

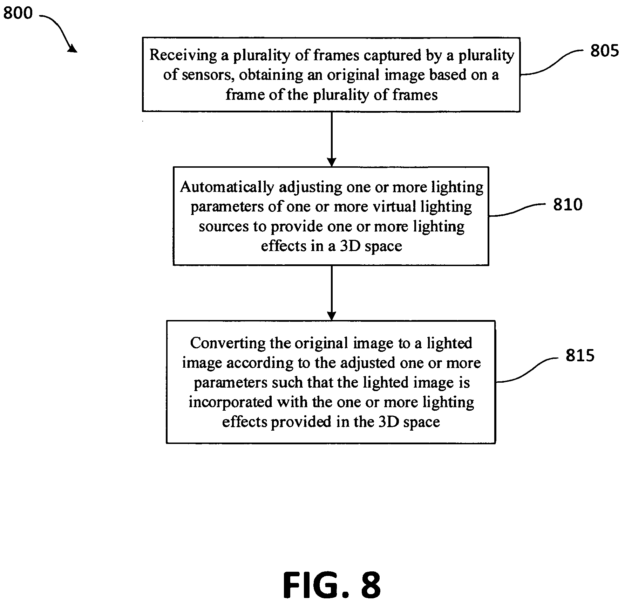

Referring to Fig. 8, another embodiment of the method 800 for providing light to an image is illustrated. This embodiment is directed to producing a lighted image according to automatically adjusted lighting parameters. In Fig. 8, the method 800 may comprise at 805 receiving a plurality of frames captured by a plurality of sensors. Method 800 may include at 810, obtaining an original image based on a frame of the plurality of frames, automatically adjusting one or more lighting parameters of one or more virtual lighting sources to provide one or more lighting effects in a 3D space. Method 800 may also include at 815, converting the original image to a lighted image according to the adjusted one or more parameters such that the lighted image is incorporated with the one or more lighting effects provided in the 3D space.

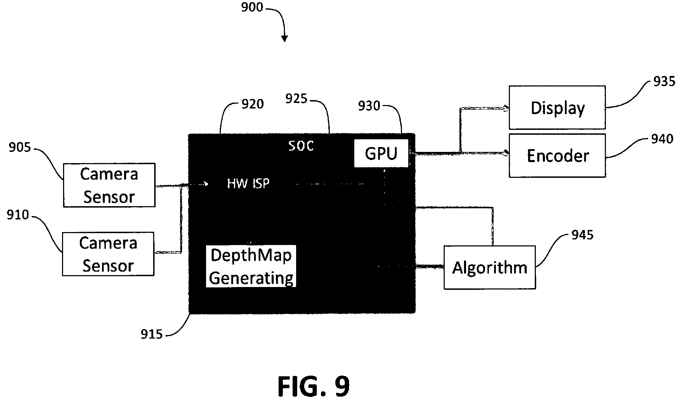

Fig. 9 illustrates a system 900 for capturing video with virtual lighting in accordance with some embodiments of the present invention. In Fig. 9, system 900 may be configured to include a plurality of sensors, such as camera sensors 905 and 910 configured to capture motion frames or still frames in certain embodiments. System 900 also includes a system on chip (SOC) 925 comprising at least one hardware-image signal processor (HW ISP) 920 configured to receive input from sensors 905 and 910, a depth map processor 915 configured to receive a processed image signal from the HW ISP 920 to further process a 3D video signal therefrom (to generate depth map from the sensor information), and a graphical processing unit (GPU) 930 configured to receive the processed image signal from HW ISP 920 and the 3D video signal from depth map generator 915 which may be further sent through an algorithm module 945 prior to being further processed via GPU 930. Algorithm module 945, in some embodiments may be hardware-based or software-based.

System 900 may also include a display 935 configured to provide and show the resulting image or video as processed and an encoder 940 configured to store the same. Specifically, encoder 940 is configured to generate a file for storage, such as in a jpeg format.

In some embodiments, system 900 may be implemented by each element shown in Fig. 9, except sensors 905 and 910 and display 935, as hardware or software, or a combination of both. For example, in certain embodiments, the algorithm module 945 is software, but the other elements shown in Fig. 9 are implemented in hardware. In another embodiment, algorithm module 945 and depth map generator 915 may both be implemented in software, and the other elements shown in Fig. 9 are implemented in hardware. In yet another embodiment, all of the elements shown in Fig. 9, except sensors 905 and 910 and display 935, are all implemented in software.

In certain embodiments, the depth map generator 915 is implemented in the SOC 925 and may be configured to obtain depth map information in real time.

System 900, in some embodiments, the position(s) (and/or other parameters) of the virtual light sources can be adjusted manually through the UI by the user or automatically by system. It is noted that in some other embodiments, parts of the parameters can be manually adjusted and parts of the parameters can be automatically adjusted. In other words, the user can view a video (including each image in the video) applied with the relighting effect based on the adjusted position(s) of the virtual light source(s).

Compared to conventional flash lighting, where the main difference lies in that the conventional flash lighting has to be fired once for one image, again and again for different images, causing relighting effect for each image by a respective firing operation. However, in embodiments of the present invention there can be no so-called firing time of the virtual light(s). In certain embodiments, the system 900 constructs a respective 3D model for each image in a video to light the image. In other words, in calculation via the SOC 925, a respective 3D model for each image in the video is calculated based on adjusted position(s) of the virtual light source(s).

Software, computer readable instructions, that implements features or functionality described herein is stored in non-volatile (non-transient) memory (e.g., programmable logic) and is executed by an electronic device having a processor (computer processor) such a smartphone to provide the present features or functionality and related steps. The software is applied to the processor from non-volatile memory to provide the features or functionality. As discussed, a combination of hardware and software implementation can be contemplated Also, in some embodiments, data such as frames, images, or intermediate images are only carried or stored in transient memory or in a transient state (e.g., while the system is operating to produce a final image). This is related to a real time aspect of embodiments of the present invention. Real time means the device performs an operation and produces an output as it receives one or more inputs (in this case one or more frames). Described in a different way from the user's perspective but which imparts meaning to the operation of the device, the device operates such that the user of the device perceives the output to be produced instantaneously (e.g., without appreciable delay perceived by the user) when the user or device selects to take a picture (resulting in the sensors generating frames). In some embodiments, real time (or real time process/computing) means performing the process or computing operation without retrieving the relevant data from non-volatile memory.

The term original image as used throughout this specification may refer to a preliminary 2D frame and is used interchangeably herein this disclosure.

It is understood from the above description that the functionality and features of the systems, devices, or methods of embodiments of the present invention include generating and sending signals to accomplish the actions.

It should be understood that variations, clarifications, or modifications are contemplated. Applications of the technology to other fields are also contemplated.

Exemplary systems, devices, and methods are described for illustrative purposes. Further, since numerous modifications and changes will readily be apparent to those having ordinary skill in the art, it is not desired to limit the invention to the exact constructions as demonstrated in this disclosure. Accordingly, all suitable modifications and equivalents may be resorted to falling within the scope of the invention.

Thus, for example, any sequence(s) and/or temporal order of steps of various processes or methods (or sequence of device connections or operation) that are described herein are illustrative and should not be interpreted as being restrictive. Accordingly, it should be understood that although steps of various processes or methods or connections or sequence of operations may be shown and described as being in a sequence or temporal order, but they are not necessarily limited to being carried out in any particular sequence or order. For example, the steps in such processes or methods generally may be carried out in various different sequences and orders, while still falling within the scope of the present invention. Moreover, in some discussions, it would be evident to those of ordinary skill in the art that a subsequent action, process, or feature is in response to an earlier action, process, or feature.

It is also implicit and understood that the applications or systems illustratively described herein provide computer-implemented functionality that automatically performs a process or process steps unless the description explicitly describes user intervention or manual operation.

It should be understood that claims that include fewer limitations, broader claims, such as claims without requiring a certain feature or process step in the appended claim or in the specification, clarifications to the claim elements, different combinations, and alternative implementations based on the specification, or different uses, are also contemplated by the embodiments of the present invention.

It should be understood that combinations of described features or steps are contemplated even if they are not described directly together or not in the same context.

The terms or words that are used herein are directed to those of ordinary skill in the art in this field of technology and the meaning of those terms or words will be understood from terminology used in that field or can be reasonably interpreted based on the plain English meaning of the words in conjunction with knowledge in this field of technology. This includes an understanding of implicit features that for example may involve multiple possibilities, but to a person of ordinary skill in the art a reasonable or primary understanding or meaning is understood.

Software can be implemented as distinct modules or software applications or can be integrated together into an overall application such as one that includes the user interface and that handles other feature for providing the functionality to the user on their device.

It is to be understood that additional embodiments of the present invention described herein may be contemplated by one of ordinary skill in the art and that the scope of the present invention is not limited to the embodiments disclosed. While specific embodiments of the present invention have been illustrated and described, numerous modifications come to mind without significantly departing from the spirit of the invention, and the scope of protection is only limited by the scope of the accompanying claims.

## Claims

1. A computer-implemented method, comprising:
implementing, on a mobile device, a virtual light source that is adjustable in a virtual three-dimensional (3D) space;
receiving a user input instructing the mobile device to capture in real time a two-dimensional (2D) output image of a current view of a plurality of device sensors;
receiving a plurality of sensor outputs produced from sensing information in the current view by the plurality of device sensors comprising sensing, by one or more of the plurality of device sensors, a preliminary 2D frame; and
in response to receiving the sensor outputs and the user input, producing on the mobile device, in real time in relation to receiving the sensor outputs, the 2D output image in accordance with an adjustment to the virtual light source and the preliminary 2D frame.

2. The method according to claim 1, further comprising:
displaying the current view in a preview screen of the mobile device;
displaying in a user interface of the mobile device a representative of the virtual light source in a representative of the 3D space;
receiving a user selected adjustment to the representative of the virtual light source;
adjusting the virtual light source according to the received user selected adjustment; and
displaying a modified version of the current view in real time in the preview screen in accordance with the adjusted virtual light source.

3. The method according to any of the preceding claims, further comprising providing on a display of the mobile device a viewscope and producing current view displayed by the viewscope with a light effect produced from the virtual light source.

4. The method according to any of the preceding claims, wherein the adjustment to the virtual light source includes a characteristic selected from a group comprising position, radiation orientation, radiation area, radiation strength, type, and color of the virtual light source, wherein the adjustment to the virtual light source is preferably provided by:
displaying a user interface including a representative of the virtual light source in a representative of the 3D space;
receiving a user selected adjustment to the representative of the virtual light source; and
adjusting the virtual light source according to the received user selected adjustment.

5. The method according to any of the preceding claims, wherein the step of implementing the virtual light source comprises determining environmental light and/or objects from sensing information in the current view by one or more of the plurality of device sensors; wherein the step of determining environmental light is preferably implemented as part of producing a display as a viewscope; and/or wherein the step of determining environmental light is preferably implemented as part of producing the 2D output image.

6. The method according to any of the preceding claims, wherein the virtual 3D space is constructed from at least some of the plurality of sensor outputs.

7. The method according to any of the preceding claims, wherein the step of producing the 2D output image comprises generating a 2D lighting image from the adjustment to the virtual light source and the virtual 3D space, wherein the 2D lighting image is preferably an image containing only lighting information resulting from the adjustment to the virtual light source and the virtual 3D space; and/or
wherein the step of producing the 2D output image preferably comprises combining the 2D lighting image and the preliminary 2D frame; and/or
wherein the step of generating the 2D lighting image preferably comprises:
creating a 3D scene tree comprising one or more lighting nodes;
adjusting the one or more lighting nodes according to the adjustment to the virtual light source; and
rendering the 2D lighting image based on the adjusted one or more lighting nodes.

8. The method according to any of the preceding claims wherein the method further comprises synchronizing the plurality of device sensors to simultaneously sense information in the current view before sensing information in the current view.

9. A processing system (200) for providing a mobile camera application for use with a plurality of device sensors (205) of a mobile device, comprising:
a processor and related circuitry (200) that are configured to:
receive a user input instructing the mobile device to capture in real time a two-dimensional (2D) output image of a current view of the plurality of device sensors (205);
receive a plurality of sensor outputs produced from sensing information in the current view by the plurality of device sensors (205) comprising sensing, by one or more of the plurality of device sensors (205), a preliminary 2D frame,
create a virtual three-dimensional (3D) space from at least some of the plurality of sensor outputs,
provide lighting effect to the virtual 3D space according to an adjustment to a virtual light source in the virtual 3D space upon receiving a signal generated from such an adjustment, and
in response to receiving the sensor outputs and the user input, produce, in real time in relation to receiving the sensor outputs, the 2D output image in accordance with the adjustment to the virtual light source and the preliminary 2D frame.

10. The processing system of claim 9, wherein the processor and related circuitry comprise an application processor (215) that is configured to perform the step of providing lighting effect; and/or
wherein the processor and related circuitry comprise a graphics processor (220) that is configured to perform the step of producing the 2D output image; and/or
wherein the processor and related circuitry comprise a construction module that is configured to perform the step of creating the virtual 3D space.

11. The processing system of any of claims 9 to 10, wherein the processor and related circuitry comprise a depth map generating circuitry in a semiconductor chip; and/or wherein the processor and related circuitry are configured to include parallel processes comprising (a) a display process that displays the 2D output image to a screen of the mobile device and (b) an encoding process that encodes the 2D output image to be in a format for storage as an image file in non-volatile memory; and/or
wherein the processor and related circuitry are configured to produce the 2D output image without using non-volatile memory on the mobile device for storing the preliminary 2D frame.

12. The processing system of claims 9 to 11, wherein the processor and related circuitry are configured to implement the virtual light source as a virtual camera flash that lights the preliminary 2D frame as part of producing the 2D output image; and/or wherein the processor and related circuitry are configured to provide the virtual light source as a user-selectable camera option as part of taking pictures; and/or
wherein the processor and related circuitry are configured to produce the 2D output image as a still image; and/or
wherein the processor and related circuitry are configured to produce a video comprising the 2D output image.

13. The processing system of claims 9 to 12, wherein the processing system comprises the plurality of device sensors and wherein at least two of the plurality of device sensors are spread apart and positioned on the same side of the mobile device; and/or
wherein at least one of the plurality of device sensors is a depth sensor; and/or wherein the processor and related circuitry are directly connected to the plurality of device sensors.

14. The processing system of any of claims 9 to 13, wherein the plurality of sensor outputs comprise frames produced by the plurality of device sensors; and/or
wherein the processor and related circuitry are configured to produce the 2D output image using the virtual light source and the sensor outputs without storing and fetching the preliminary 2D frame; and/or wherein the processor and related circuitry are configured to control a relationship between exposure and a duration of light from the virtual light source.

15. The processing system of any of claims 9 to 14, wherein the processor and related circuitry comprise a hardware image signal processor that receives the plurality of sensor outputs; and/or
wherein the processor and related circuitry include a system on chip that performs depth image generation.
